# EUROPEAN PATENT SPECIFICATION

(11) **EP 2 752 917 B1**
(45) Date of publication and mention of the grant of the patent: **31.08.2016**
(21) Application number: 14150274.0
(22) Date of filing: 07.01.2014
(51) Int. Cl.: H01M 2/20, H01M 10/48, H01M 2/10, H01M 2/12

(54) **BATTERY MODULE**
BATTERIEMODUL
MODULE DE BATTERIE

(30) Priority: 08.01.2013 US 201361750096 P; 06.12.2013 US 201314098573
(43) Date of publication of application: 09.07.2014
(73) Proprietor: Samsung SDI Co., Ltd., Yongin-si, Gyeonggi-do (KR)
(72) Inventor: Lee, Jin-Bok, Yongin-si (KR); Lee, Jang-Wook, Yongin-si (KR)
(74) Representative: Gulde & Partner

(56) References cited:
- DE-A1- 19 810 746
- US-A1- 2010 203 378

## Description

### BACKGROUND

### 1. Field

The described technology relates generally to a battery module. More particularly, the described technology relates generally to a battery module including a rechargeable battery.

### 2. Description of the Related Art

A rechargeable battery differs from a primary battery in that it can be repeatedly charged and discharged, while the latter makes only the irreversible conversion of chemical to electrical energy. The low-capacity rechargeable battery is used as the power supply for small electronic devices, such as cellular phones, notebook computers and camcorders, while the high-capacity rechargeable battery is used as the power supply for driving motors in hybrid vehicles and the like.

A high-power rechargeable battery using a non-aqueous electrolyte with a high energy density has been recently developed. A battery module may be formed of a plurality of rechargeable battery coupled to each other in series, and the rechargeable battery may have a cylindrical shape or a prismatic shape.

Each of the rechargeable batteries forming the battery module iteratively perform charging and discharging, thereby causing performance deterioration.

Thus, a device for measuring a charging state or a discharging state of the rechargeable battery is required.

However, the same number of measuring devices of the rechargeable batteries should be installed in the battery module to measure charging/discharging states of the respective rechargeable batteries. DE 19810746A1 describes, for monitoring of accumulator, state of charge , a plate cut out to form segments. The segments determine each cell and are connected to the pole connections thereby carrying take-offs for the temperature and voltage of the cells.

The above information disclosed in this Background section is only for enhancement of understanding of the background of the described.

### SUMMARY

The described technology has been made in an effort to provide a battery module including a rechargeable battery state measuring device that can be simply installed in the battery module.

According to an aspect of the invention a battery module according to claim 1 includes batteries, each of the batteries including electrode terminals and a vent hole; a measurement member that measures one or more of a voltage, a current, or a temperature of each of the batteries, the measurement member including at least one exposure portion and receiving portions, the at least one exposure portion exposes at least one vent hole of the batteries; and connection members, each of the connection members electrically connecting electrode terminals of neighboring batteries and including a protrusion, the protrusion of each of the connection members being electrically connected to the measurement member and engaging one of the receiving portions.

The measurement member includes a first body portion and a second body portion, the first body portion and the second body portion extend along opposite sides of the at least one exposure portion, and the first body portion and the second body portion extend between the electrode terminals of each of the batteries.

The battery module may further comprise an exhaust receiving member that overlaps the at least one exposure portion and defines an exhaust path for the at least one vent hole.

The at least one exposure portion may expose the vent hole of each of the batteries.

The at least one exposure portion may include a first exposure portion and a second exposure portion, the first exposure portion exposing a first vent hole of a first
battery, and the second exposure portion exposing a second vent hole of a second battery.

Or, the at least one exposure portion may be a single exposure portion that exposes all of the vent holes of the batteries.

Each of the protrusions may extend from the respective connection member and may include an uppermost surface that faces away from the batteries, the uppermost surface of each protrusion engaging one of the receiving portions.

The uppermost surface of each protrusion may engage a lower surface of the receiving portion.

The receiving portions may be grooves, and the protrusion of each of the connection members may be inserted into one of the grooves.

The grooves each may have a first width, the protrusion of each of the connection members may have a second width, with the first width being smaller than the second width.

The protrusion of each of the connection members may extend from an uppermost surface of each of the connection members, and the uppermost surface of each protrusion may be coplanar with the uppermost surface of each of the connection members.

The battery module may further comprise a column on the protrusion of each of the connection members. Then the receiving portions are through-holes, and the column of each of the connection members projects through one of the through-holes.

The protrusion of each of the connection members may extend from an uppermost surface of each of the connection members in a direction parallel to the uppermost surface of each of the connection members, and the column of each of the connection members may project from the protrusion in a direction perpendicular to the uppermost surface of each of the connection members.

The column of each of the connection members may have a first portion with a first diameter and a second portion with a second diameter, the second portion being between the first portion and the protrusion of each of the connection members, and the first diameter being greater than the second diameter.

The column of each of the connection members may be coupled to the measurement member with a separate fastener.

Each of the connection members may be welded to a first electrode terminal of one battery and a second electrode terminal of a neighboring battery.

The electrode terminals of the batteries may ge arranged in a first row and a second row, the first row being substantially parallel to the second row. Then the connection members may include: first connection members over the electrode terminals arranged in the first row, and second connection members over the electrode terminals arranged in the second row.

The battery module may further comprise single-terminal connection members, each of the single-terminal connection members being electrically connected to one of the electrode terminals of only one of the batteries, wherein: each of the single-terminal connection members includes a protrusion that extends therefrom, each protrusion of the single-terminal connection members is electrically connected to the measurement member, and includes an uppermost surface that faces away from the batteries, and the uppermost surface of each protrusion of the single-terminal connection members engages one of the receiving portions.

The batteries may be arranged in a stack, wherein the stack includes a first battery on a first side of the stack and a second battery on a second side of the stack, the first side is opposite the second side, and the single-terminal connection members may include: a first single-terminal connection member electrically connected to one of the electrode terminals of only the first battery, and a second single-terminal connection member electrically connected to one of the electrode terminals of only the second battery.

The measurement member may include a flexible circuit board.

According to the exemplary embodiment, the states of the rechargeable batteries forming the battery module can be measured using a simple structure.

In addition, according to the present exemplary embodiment, a state measuring device of the rechargeable battery can be simply installed in the battery module.

### BRIEF DESCRIPTION OF THE DRAWINGS

FIG. 1 is a perspective view of a battery module according to a first exemplary embodiment of the present invention.
FIG. 2 is an exploded perspective view of the battery module of FIG. 1.
FIG. 3 is a top plan view of a connection member and a measurement member of FIG. 1 in a separated state.
FIG. 4 is a partially exploded perspective view of a connection member and a measurement member according to a second exemplary embodiment of the present invention.
FIG. 5 is a side view of the connection member and the measurement member of FIG. 4 in a coupled state.
FIG. 6 is a partially exploded perspective view of the connection member and the measurement member according to the second exemplary embodiment of the present invention.
FIG. 7 is a side view of the connection member and the measurement member of FIG. 6 in a coupled state.

### DETAILED DESCRIPTION

In the following detailed description, only certain exemplary embodiments of the present invention have been shown and described, simply by way of illustration. Like reference numerals designate like elements throughout the specification.

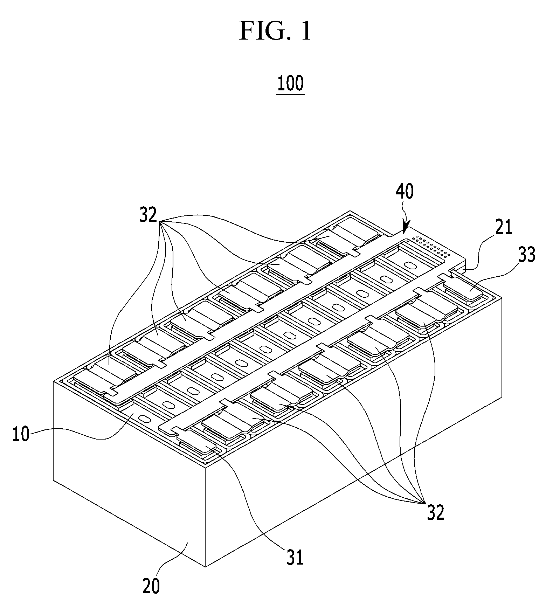

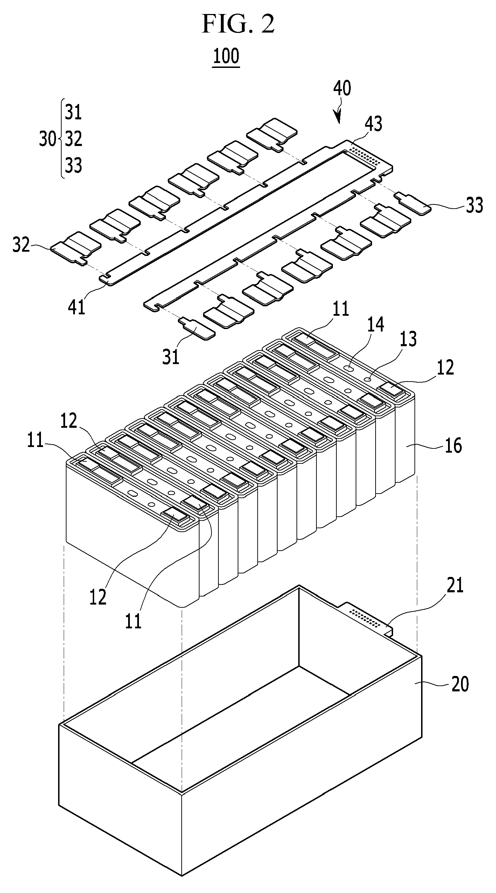

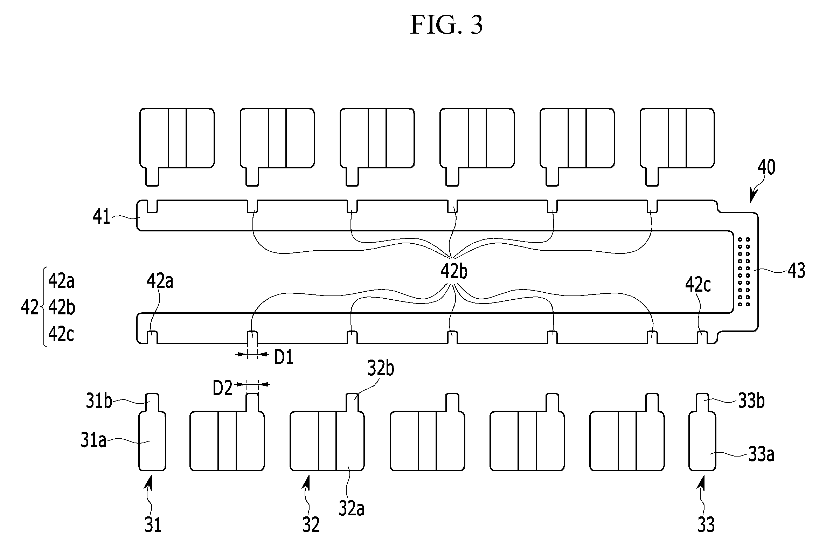

FIG. 1 is a perspective view of a battery module according to an exemplary embodiment of the present invention, FIG. 2 is an exploded perspective view of FIG. 1, and FIG. 3 is a top plan view of a connection member and a measurement member of FIG. 1 in a separated state.

Referring to FIG. 1 and FIG. 2, a battery module 100 according to the present exemplary embodiment includes a plurality of rechargeable batteries 10, each having a first electrode terminal 11 and a second electrode terminal 12, and a receiving container 20 in which the rechargeable batteries 10 are received.

The battery module 100 according to the present exemplary embodiment is formed by coupling the rechargeable batteries 10 in series. However, the present invention is not limited thereto, and the rechargeable batteries 10 may be coupled in parallel or coupled in a serial-and parallel combination.

A case 16 of the rechargeable battery 10 of the present exemplary embodiment is formed in the shape of a prism and a cap plate 13 is coupled to one opening of the case, and the first electrode terminal 11 and the second electrode terminal 12 may protrude through the cap plate 13.

Here, as shown in FIG. 1, the first electrode terminal 11 and the second electrode terminal 12 of the present exemplary embodiment may be plate-shaped terminals, respectively.

However, the shape of the electrode terminals according to the present exemplary embodiment is not limited to a plate, and they may be bolt-type electrode terminals.

In addition, the first electrode terminal 11 and the second electrode terminal 12 may be electrically connected to one of a positive electrode and a negative electrode of an electrode assembly (not shown) received in the case 16.

The cap plate 13 may include a vent member 14 opened when an internal pressure is increased and a sealing cap sealing an electrolyte injection opening.

In addition, the case 16 according to the present exemplary embodiment can be electrically connected with the positive electrode or the negative electrode of the electrode assembly (not shown) through the first electrode terminal 11 or the second electrode terminal 12.

The rechargeable batteries 10 according to the exemplary embodiment of the present invention may be electrically connected with each other by a connection member 30.

In further detail, when neighboring rechargeable batteries 10 are received in the receiving container 20, the first electrode terminals 11 or the second electrode terminals 12 of the rechargeable batteries 10 are serially disposed such that two columns may be formed.

Thus, when the rechargeable battery 10 is received in the receiving container 20 such that the first electrode terminals 11 and the second electrode terminals 12 are alternatively disposed in each of the two columns, first electrode terminals 11 and second electrode terminals 12 of neighboring rechargeable batteries 10 are disposed in parallel so that the rechargeable batteries 10 can be coupled in series.

That is, the rechargeable batteries 10 received in the receiving container 20 can be electrically coupled in series by coupling the connection member 30 to each of the first electrode terminal 11 and the second electrode terminal 12 disposed in parallel.

In addition, the rechargeable batteries 10 and a measurement member 40 can be electrically coupled through the connection member 30 according to the present exemplary embodiment.

That is, the connection member 30 according to the present exemplary embodiment may be coupled with the first electrode terminal 11 or the second electrode terminal 12 and the measurement member 40 so that the rechargeable batteries 10 and the measurement member 40 can be electrically connected through the connection member 30.

Hereinafter, a coupling relationship between the connection member 30, the first and second electrode terminals 11 and 12, and the measurement member 40 according to the present exemplary embodiment will be described in further detail.

The connection member 30 according to the present exemplary embodiment may include a first connection member 31, a second connection member 32, and a third connection member 33.

The first connection member 31 according to the present exemplary embodiment may include a first body 31 a coupled to the second electrode terminal 12 of the outermost battery module 100 and a first protrusion 31 b formed by being extended from one side of the first body 31 a.

In addition, the second connection member 32 according to the present exemplary embodiment may include a second body 32a coupled to at least one of the first and second electrode terminals 11 and 12 by welding and a second protrusion 32b formed by being extended from one side of the second body 32a.

Thus, a part of the second body 32a is coupled to the first electrode terminal 11 disposed in the opposite side of the second electrode terminal 12 of the outermost rechargeable battery 10 to which the first connection member 31 is coupled, and the other portion of the second body 32a may be coupled to the second electrode terminal 12 of the neighboring rechargeable battery 10.

Here, the second connection member 32 of the present exemplary embodiment may include a plurality of connection members.

Thus, the first electrode terminals 11 and the second electrode terminals 12 formed in the rechargeable batteries 10 coupled in series can be sequentially connected by the plurality of second connection members 32, respectively.

In addition, the third connection member 33 according to the present exemplary embodiment may include a third body 33a and a third protrusion 33b.

According to the present exemplary embodiment, the third body 33a of the third connection member 33 may be coupled to the first electrode terminal 11 of the outermost rechargeable battery 10 that is disposed opposite to the rechargeable battery 10 to which the first connection member 31 is coupled.

Thus, the rechargeable batteries 10 received in the receiving container 20 according to the present exemplary embodiment can be electrically coupled in series by the first, second, and third connection members 31, 32, and 33.

In addition, the measurement member 40 of the present exemplary embodiment may include a body portion 41, a groove portion 42, and a connection portion 43.

According to the present exemplary embodiment, the body portion 41 of the measurement member 40 is preferably formed of a flexible circuit board.

In addition, the groove portion 42 formed in the body portion 41 of the measurement member 40 may include a plurality of grooves to which the first protrusion 31b of the first connection member 31, the second protrusion 32b of the second connection member 32, and the third protrusion 33b of the third connection member 33 can be inserted, respectively.

That is, according to the present exemplary embodiment, the first protrusion 31b of the first connection member 31 may be inserted into the first groove 42a, the second protrusion 32b of the second connection member 32 may be inserted into the second groove 42b, and the third protrusion 33b of the third connection member 33 may be inserted into the third groove 42c.

Here, the width of the first protrusion 31 b, the width of the second protrusion 32 b, and the width of the third protrusion 33b are preferably wider than the width of each of the first, second, and third grooves 42a, 42b, and 43b to which the first protrusion 31 b, the second protrusion 32b, and the third protrusion 33b are respectively inserted.

For example, when the width of the second groove 42b is D1 and the width of the second protrusion 32b is D2, D1 is preferably smaller than D2.

That is, when the second protrusion 32b is inserted into the second groove 42b in the present exemplary embodiment, the second protrusion 32b is tightly fit into the second groove 42b, and therefore the measurement member 40 can be fixed to the rechargeable module 100 by the second protrusion 32b.

Thus, the measurement member 40 can be fixed to the battery module 100 by inserting protrusions formed in the first to third connection members 31, 32, and 33 into the grooves 42 of the measurement member 40 according to the present exemplary embodiment.

In addition, one or more circuits (not shown) may be formed in the body portion 41 of the protection circuit board 40 such that each of the circuits may be connected to one of the grooves of the first groove 42a, the second groove 42b, and the third groove 42c of the groove portion 42.

Thus, when the first protrusion 31 b of the first connection member 3, the second protrusion 32b of the second connection member 32, and the third protrusion 33b of the third connection member 33 are coupled to the grooves 42a, 42b, and 42c formed in the body portion 41 of the measurement body 40, the first connection member 31, the second connection member 32, and the third connection member 33 each can be electrically connected with one of the circuits (not shown) in the measurement member 40.

In addition, one end of the circuits (not shown) formed in the measurement member 40 according to the present exemplary embodiment may be extended to the connection portion 43 of the measurement member 40.

Thus, as shown in FIG. 1, when the connection portion 43 of the measurement member 40 is electrically connected to a signal draw out portion 21 formed in one end of the receiving container 20, a signal related to a current or a voltage of the rechargeable battery 10 can be drawn out to the outside of the battery module 100 through the respective circuit (not shown) formed in the measurement member 40.

Thus, according to the present exemplary embodiment, voltages and currents of the rechargeable batteries forming the battery module 100 can be measured by using only one measurement member 40 without using a plurality of measurement devices.

Further, the measurement member 40 can be simply installed in the battery module 100 according to the present exemplary embodiment.

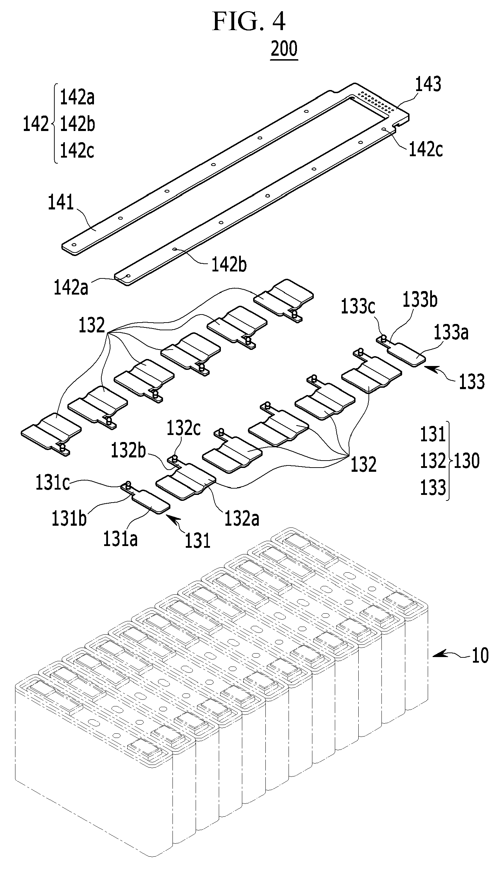

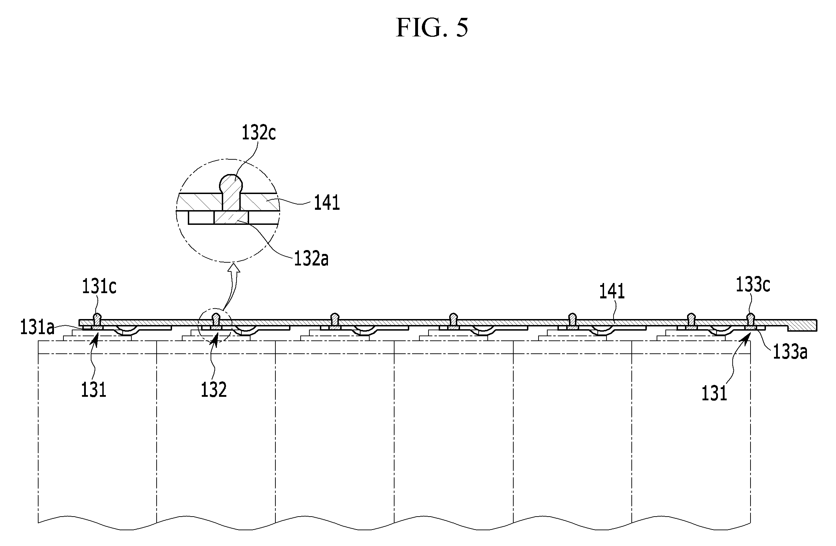

FIG. 4 is a partially exploded perspective view of a connection member and a measurement member according to a second exemplary embodiment of the present invention, and FIG. 5 is a side view of the connection member and the measurement member of FIG. 4 in a coupled state.

Referring to FIG. 4 and FIG. 5, a battery module 200 according to the second exemplary embodiment of the present invention may be the same as the battery module 100 of the first exemplary embodiment, except for a battery module 100, a connection member 130, and a measurement member 140.

Therefore, a description for the same configuration of the battery module 100 of the first exemplary embodiment will be omitted.

A connection member 130 according to the present exemplary embodiment may include a first connection member 131, a second connection member 132, a third connection member 133.

The first connection member 131 according to the present exemplary embodiment may include a first body 131 coupled to the second electrode terminal 12 of the outermost rechargeable battery 10 of the battery module 200, a first protrusion 131 b formed by being extended from one side of the first body 131 a, and a first column 131c extended from the first protrusion 131b in a direction that is substantially perpendicular to the extension direction of the first protrusion 131 b.

In addition, the second connection member 132 according to the present exemplary embodiment may include a second body 132a coupled to one of the first electrode 11 and the second electrode 12 by welding, a second protrusion 132b extended from one side of the second body 132a, and a second column 132b extended from the second protrusion 132b in a direction that is substantially perpendicular to the extension direction of the second protrusion 132b.

Thus, the second body 132a is partially coupled to the first electrode terminal 11 disposed opposite to the second electrode terminal 12 of the outermost rechargeable battery 10 to which the first connection member 131 is coupled, and the other portion of the second body 132a may be coupled to the second electrode terminal 12 of the neighboring rechargeable battery 10.

Here, the second connection member 132 of the present exemplary embodiment may include a plurality of connection members.

Thus, the first electrode terminals 11 and the second electrode terminals 12 formed in the rechargeable batteries 10 coupled in series can be sequentially connected by the plurality of second connection members 132, respectively.

In addition, the third connection member 133 according to the present exemplary embodiment may include a third body 133a, a third protrusion 133b extended from the third body 133a, and a third column 133c extended from the third protrusion 133b in a direction that is substantially perpendicular to the extension direction of the third protrusion 133b.

According to the present exemplary embodiment, the third body 133b of the third connection member 133 may be coupled to the first electrode terminal 11 of the rechargeable battery 10 disposed on the opposite outermost side of the rechargeable battery 10 to which the first connection member 131 is coupled.

Thus, according to the present exemplary embodiment, the rechargeable batteries 10 received in the receiving container 20 can be electrically coupled in series by the first, second, and third connection members 131, 132, and 133.

In addition, the measurement member 140 according to the present exemplary embodiment may include a body portion 141, an opening 142, and a connection portion 143.

According to the present exemplary embodiment, the body portion 141 of the measurement member 140 is preferably formed of a flexible circuit board.

The opening 142 formed in the body portion 141 of the measurement member 140 may include a plurality of openings to which a first column 131c of the first connection member 131, a second column 132c of the second connection member 132, and a third column 133c of the third connection member 133 are inserted.

Thus, according to the present exemplary embodiment, the first column 131c of the first connection member 131 may be inserted into the first opening 143, the second column 132c of the second connection member 132 may be inserted into the second opening 142b, and the third column 133c of the third connection member 133 may be inserted into the third opening 142c.

Here, the width of each of the first, second, and third columns 131c, 132c, and 133c according to the present exemplary embodiment is preferably wider than the width of each of the first, second, and third openings 142a, 142b, and 142c to which the first, second, and third columns 131c, 132c, and 133c are respectively inserted.

That is, in the present exemplary embodiment, when the second column 132c is inserted to the second opening 142b, the second column 132c is tightly fitted to the second opening 142b, and therefore the measurement member 140 can be fixed to the battery module 200 by the second column 132c.

Thus, the measurement member 140 can be fixed to the battery module 200 by inserting the first to third columns 131c, 132c, and 133c formed in the first to third connection members 131, 132, and 133.

Here, as shown in FIG. 4, one end of each of the first to third columns 131c, 132c, and 133c according to the present exemplary embodiment may include a portion thicker than other portion of the columns.

In addition, one or more circuits (not shown) may be formed in the body portion 141 of the measurement member 140 and each of the circuits may be connected to one of the openings of the first, second, and third openings 142a, 142b, and 142c.

Thus, when the first column 131c of the first connection member 131, the second column 132c of the second connection member 132, and the third column 133c of the third connection member 133 are coupled with the openings 142a, 142b, and 142c formed in the body portion 141 of the measurement member 140, the first connection member 131, the second connection member 132, and the third connection member 133 each can be electrically connected with one of the circuits (not shown) of the measurement member 140.

In addition, one end of the circuits (not shown) formed in the measurement 140 may be extended to the connection portion 143 of the measurement member 140.

Thus, as shown in FIG. 1, when the connection portion 143 of the measurement member 140 is electrically connected to a signal draw out portion 21 formed in one end of the receiving container 20, a signal related to a current or a voltage of the rechargeable battery 10 can be drawn out to the outside of the battery module 200 through the respective circuit (not shown) formed in the measurement member 140.

Thus, according to the present exemplary embodiment, voltages and currents of the rechargeable batteries forming the battery module 200 can be measured by using only one measurement member 140 without using a plurality of measurement devices.

Further, the measurement member 140 can be simply and stably installed in the battery module 200 according to the present exemplary embodiment.

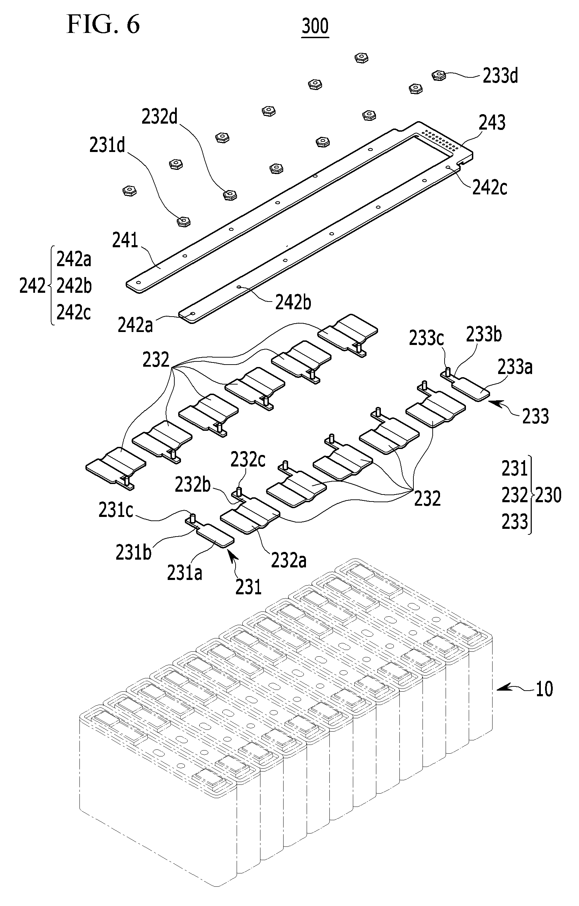

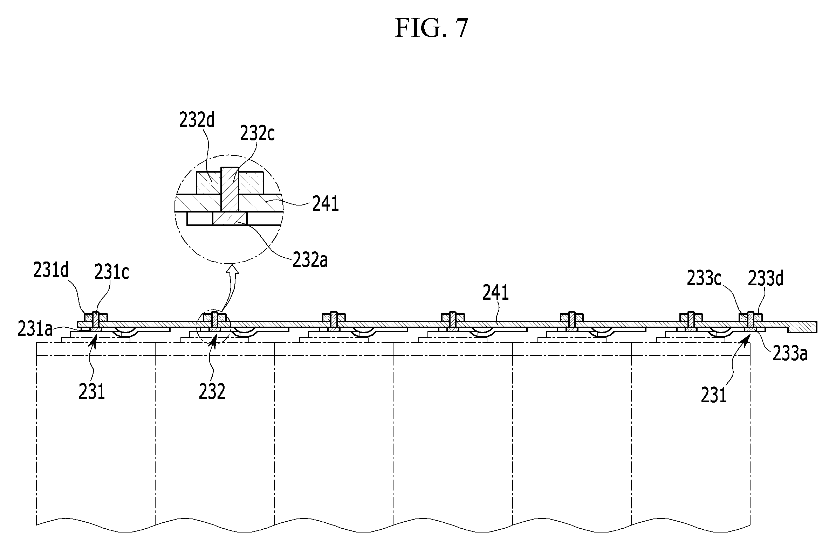

FIG. 6 is a partially exploded perspective view of a connection member and a measurement according to a third exemplary embodiment of the present invention, and FIG. 7 is a side view of the connection member and the measurement member of FIG. 6 in a coupled state.

Referring to FIG. 6 and FIG. 7, a battery module 300 of the present exemplary embodiment is the same as the battery module 200 of the second exemplary embodiment, except for a battery module 200, a connection member 230, and a measurement member 240.

Therefore, a description for the same configuration of the battery module 200 of the second exemplary embodiment will be omitted.

The connection member 230 according to the present exemplary embodiment may include a first connection member 231, a plurality of second connection members 232, and a plurality of third connection members 233.

The first connection member 231 of the present exemplary embodiment may include a first body 231 a coupled to the second electrode terminal 12 of the outermost rechargeable battery 10 of the battery module 300, a first protrusion 231 b extended from one side of the first body 231 a, and a first bole 231 c and a first nut 231 d extended from the first protrusion 231 b in a direction that is substantially perpendicular to the extension direction of the first protrusion 231 b.

In addition, the second connection member 232 according to the present exemplary embodiment may include a second body 232a coupled to at least one of the first and second electrode terminals 11 and 12 by welding, a second protrusion 232b extended from one side of the second body 232a, and a second bolt 232c and a second nut 232d extended from the second protrusion 232b in a direction that is substantially perpendicular to the extension direction of the second protrusion 232b.

Thus, the second body 232a is partially coupled to the first electrode terminal 11 disposed opposite to the second electrode terminal 12 of the outermost rechargeable battery 10 to which the first connection member 231 is coupled, and the other portion of the second body 232a may be coupled to the second electrode terminal 12 of the neighboring rechargeable battery 10.

Here, the second connection member 232 of the present exemplary embodiment may include a plurality of connection members.

Thus, the first electrode terminals 11 and the second electrode terminals 12 formed in the rechargeable batteries 10 coupled in series can be sequentially connected by the plurality of second connection members 232, respectively.

In addition, the third connection member 233 according to the present exemplary embodiment may include a third body 233a, a third protrusion 233b extended from the third body 233a, and a third bole 233c and a third nut 233d extended from the third protrusion 233b in a direction that is substantially perpendicular to the extension direction of the third protrusion 233b.

According to the present exemplary embodiment, the third body 233b of the third connection member 233 may be coupled to the first electrode terminal 11 of the rechargeable battery 10 disposed the opposite outermost side of the rechargeable battery 10 to which the first connection member 231 is coupled.

Thus, according to the present exemplary embodiment, the rechargeable batteries 10 received in the receiving container 20 can be electrically coupled in series by the first, second, and third connection members 231, 232, and 233.

In addition, the measurement member 240 according to the present exemplary embodiment may include a body portion 241, an opening 242, and a connection portion 243.

According to the present exemplary embodiment, the body portion 241 of the measurement member 240 is preferably formed of a flexible circuit board.

The opening 242 formed in the body portion 241 of the measurement member 240 may include a plurality of openings to which the first bolt 131c of the first connection member 131, the second bolt 232c of the second connection member 132, and the third bolt 233c of the third connection member 133 are inserted.

Thus, according to the present exemplary embodiment, the first bolt 231 c of the first connection member 231 may be inserted to the first opening 232a, the second bolt 232c of the second connection member 232 may be inserted to the second opening 232b, and the third bolt 233c of the third connection member 233 may be inserted to the third opening 242c.

Subsequently, the first to third nuts 231 d, 232d, and 233d according to the present exemplary embodiment may be respectively coupled to the first to third bolts 231 c, 232c, and 233c respectively inserted to the first to third openings 242a, 242b, and 242c.

Thus, according to the present exemplary embodiment, the first to third bolts 231 c, 232c, and 233c formed in the first to third connection members 131, 132, and 133 are inserted to the openings 142 of the measurement member 240, and the first to third bolts 231 c, 232c, and 233c are fixed by the first to third nuts 231 d, 232d, and 233d such that the measurement member 240 can be simply fixed to the battery module 300.

In addition, one or more circuits (not shown) may be formed in the body portion 241 of the measurement member 240 and each of the circuits may be connected to one opening of the first, second, and third openings 242a, 242b, and 242c.

Thus, when the first bolt 231c of the first connection member 231, the second bolt 232c of the second connection member 232, and the third bolt 233c of the third connection member 233 are coupled to the openings 242a, 242b, and 242c formed in the body portion 241 of the measurement member 240, the first connection member 231, the second connection member 232, and the third connection member 233 each can be electrically connected with one of the circuits (not shown) of the measurement member 240.

In addition, one end of the circuits (not shown) formed in the measurement 240 may be extended to the connection portion 243 of the measurement member 240.

Thus, as shown in FIG. 1, when the connection portion 243 of the measurement member 240 is electrically connected to a signal draw out portion 21 formed in one end of the receiving container 20, a signal related to a current or a voltage of the rechargeable battery 10 can be drawn out to the outside of the battery module 300 through the respective circuit (not shown) formed in the measurement member 240.

Thus, according to the present exemplary embodiment, voltages and currents of the rechargeable batteries forming the battery module 300 can be measured by using only one measurement member 240 without using a plurality of measurement devices.

Further, the measurement member 240 can be simply and stably installed in the battery module 300 according to the present exemplary embodiment.

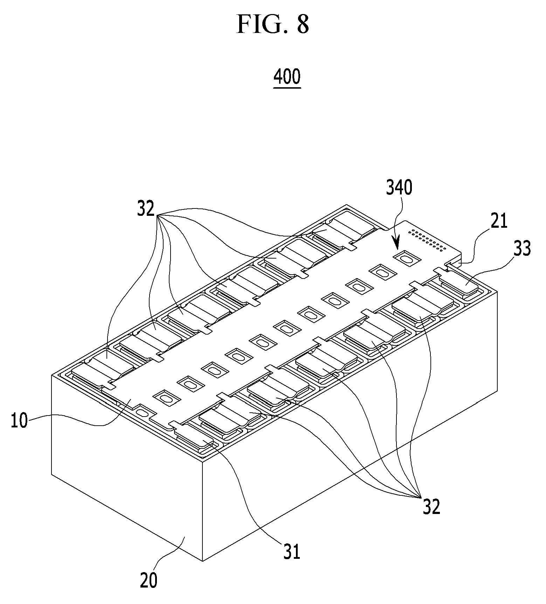

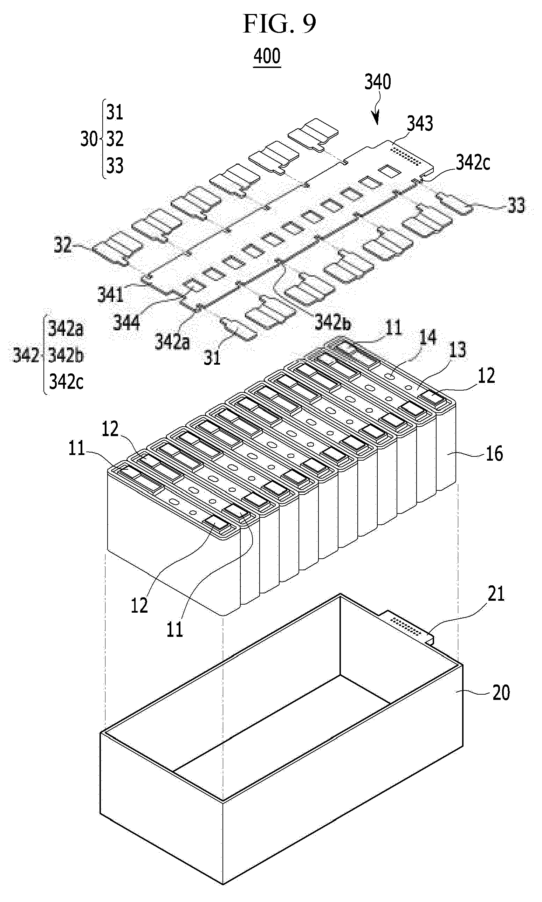

FIG. 8 is a perspective view of a battery module according to a fourth exemplary embodiment of the present invention, FIG. 9 is an exploded perspective view of FIG. 8.

Referring to FIG. 8 and FIG. 9, a battery module 400 and connection members 30 according to the fourth exemplary embodiment of the present invention may be the same as the battery module 100 and the connection members 30 of the first exemplary embodiment, except for a measurement member 340.

Therefore, a description for the same configuration of the battery module 400 and of the connection members 30 of the first exemplary embodiment will be omitted.

The measurement member 340 of the fourth exemplary embodiment may include a body portion 341, a groove portion 342, and a connection portion 343. The groove portion 342 according to the fourth exemplary embodiment of the present invention may be the same as the groove portion 42 of the first exemplary embodiment. Therefore, a description for the same configuration of groove portion 342 of the first exemplary embodiment will be omitted.

According to the fourth exemplary embodiment, the body portion 341 of the measurement member 40 is preferably formed of a flexible circuit board.

According to the first to third exemplary embodiment, the first body portion and the second body portion of the measurement member 40, 140, 240 extend along opposite sides of a single exposure portion. The single exposure portion then may expose the vent hole 14 of each of the batteries 10.

According to the fourth exemplary embodiment, the first body portion and the second body portion of the measurement member 340 extend along opposite sides of exposure portions 344 and being connected between the exposure portions 344 such that the exposure portions 344 form separte openings in the measurement member 340. Each of the exposure portions 344 may expose one of the vent holes 14 of the first batteries 10.

An exhaust receiving member may be further comprised that overlaps the exposure portions and defines an exhaust path for the vent holes 14.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### <Description of symbols>

100, 200, 300, 400: battery module
10: rechargeable battery
11, 12: terminals
13: cap plate
14: vent hole
16: case
20: receiving container
21: signal draw out portion
30, 130, 230: connection member
31, 131, 231: first connection member
31 a, 131 a, 231 a: first body
31 b, 131 b, 231b: first protrusion
32a, 132a, 232a: second body
32b, 132b, 232b: second protrusion
131c, 132c, 133c: first to third column
32, 132, 232: second connection member
33, 133, 233: third connection member
231 c, 232c, 233c: first to third bolt
231 d, 232d, 233d: first to third nut
40, 140, 240, 340: measurement member
41, 141, 241, 341: body member
42a,42b,42c: grooves
342a, 342b, 342c: grooves
142a, 142b, 142c: openings
242a, 242b, 242c: openings
43, 143, 243, 343: connection member344: exposure portion

## Claims

1. A battery module (100, 200, 300, 400), comprising:
batteries (10), each of the batteries including electrode terminals (11, 12) and a vent hole (14);
a measurement member (40, 140, 240, 340) that measures one or more of a voltage, a current, or a temperature of each of the batteries (10), the measurement member (40, 140, 240, 340) including at least one exposure portion (344) and receiving portions (42, 142, 242, 342), the at least one exposure portion (344) exposes at least one vent hole (14) of the batteries (10); and
connection members (30, 130, 230), each of the connection members (30, 130, 230) electrically connecting electrode terminals (11, 12) of neighboring batteries (10) and including a protrusion (31b, 32b, 33b, 131b, 132b, 133b, 231b, 232b, 233b), the protrusion of each of the connection members (30, 130, 230) being electrically connected to the measurement member (40, 140, 240, 340) and engaging one of the receiving portions (42, 142, 242, 342), wherein:
the measurement member (40, 140, 240, 340) includes a first body portion and a second body portion,
the first body portion and the second body portion extend along opposite sides of the at least one exposure portion, and
the first body portion and the second body portion extend between the electrode terminals (11, 12) of each of the batteries (10).

2. The battery module as claimed in claim 1, further comprising an exhaust receiving member that overlaps the at least one exposure portion and defines an exhaust path for the at least one vent hole (14).

3. The battery module as claimed in at least one of claims 1 and 2, wherein the at least one exposure portion exposes the vent hole (14) of each of the batteries (10).

4. The battery module (400) as claimed in claim 3, wherein:
the at least one exposure portion includes a first exposure portion (344) and a second exposure portion (344),
the first exposure portion (344) exposes a first vent hole (14) of a first battery (10), and
the second exposure portion (344) exposes a second vent hole (14) of a second battery (10).

5. The battery module (100, 200, 300) as claimed in claim 3, wherein the at least one exposure portion is a single exposure portion that exposes all of the vent holes (14) of the batteries (10).

6. A battery module (100, 200, 300, 400) according to one of claims 2 to 5, comprising:
each of the protrusion (31 b, 32b, 33b, 131b, 132b, 133b, 231 b, 232b, 233b) extending from the respective connection member (30, 130, 230) and including an uppermost surface that faces away from the batteries (10), the uppermost surface of each protrusion (31 b, 32b, 33b, 131 b, 132b, 133b, 231 b, 232b, 233b) engaging one of the receiving portions.

7. The battery module as claimed in claim 6, wherein the uppermost surface of each protrusion (31b, 32b, 33b, 131b, 132b, 133b, 231b, 232b, 233b) engages a lower surface of the receiving portion (42, 142, 242, 342).

8. The battery module (100, 400) as claimed in at least one of claims 6 and 7, wherein:
the receiving portions are grooves (42a, 42b, 42c, 342a, 342b, 342c), and
the protrusion (31 b, 32b, 33b) of each of the connection members (30) is inserted into one of the grooves (42a, 42b, 42c, 342a, 342b, 342c).

9. The battery module as claimed in claim 8, wherein:
the grooves (42a, 42b, 42c, 342a, 342b, 342c) each have a first width,
the protrusion (31 b, 32b, 33b) of each of the connection members (30) has a second width, and
the first width is smaller than the second width.

10. The battery module as claimed in at least one of claims 8 and 9, wherein:
the protrusion (31 b, 32b, 33b) of each of the connection members (30) extends from an uppermost surface of each of the connection members (30), and
the uppermost surface of each protrusion (31 b, 32b, 33b) is coplanar with the uppermost surface of each of the connection members (30).

11. The battery module (200, 300) as claimed in at least one of claims 6 and 7, further comprising a column (131c, 132c, 133c, 231c, 232c, 233c) on the protrusion (131b, 132b, 133b, 231b, 232b, 233b) of each of the connection members (130, 230), wherein:
the receiving portions are through-holes (142a, 142b, 142c, 242a, 242b, 242c),
the column (131c, 132c, 133c, 231c, 232c, 233c) of each of the connection members (130, 230) projects through one of the through-holes (142a, 142b, 142c, 242a, 242b, 242c).
the protrusion (131b, 132b, 133b, 231b, 232b, 233b) of each of the connection members (130) extends from an uppermost surface of each of the connection members (130, 230) in a direction parallel to the uppermost surface of each of the connection members (130), and
the column (131c, 132c, 133c, 231c, 232c, 233c) of each of the connection members (130) projects from the protrusion (131b, 132b, 133b, 231 b, 232b, 233b) in a direction perpendicular to the uppermost surface of each of the connection members (130, 230).

12. The battery module as claimed in claim 11, wherein:
the column (131c, 132c, 133c) of each of the connection members (130) has a first portion with a first diameter and a second portion with a second diameter,
the second portion is between the first portion and the protrusion (131b, 132b, 133b) of each of the connection members (130), and
the first diameter is greater than the second diameter.

13. The battery module as claimed in at least one of claims 11 and 12, wherein the column (231c, 232c, 233c) of each of the connection members (230) is coupled to the measurement member with a separate fastener (231 d, 232d, 233d).

## Patentansprüche

1. Batteriemodul (100, 200, 300, 400), aufweisend:
Batterien (10), wobei jede der Batterien Elektrodenanschlüsse (11, 12) und ein Entlüftungsloch (14) aufweist;
ein Messelement (40, 140, 240, 340), das eines oder mehrere einer Spannung, eines Stroms oder einer Temperatur jeder der Batterien (10) misst, wobei das Messelement (40, 140, 240, 340) zumindest einen Freilegeabschnitt (344) und Aufnahmeabschnitte (42, 142, 242, 342) aufweist, wobei der zumindest eine Freilegeabschnitt (344) zumindest ein Entlüftungsloch (14) der Batterien (10) freilegt; und
Verbindungselemente (30, 130, 230), wobei jedes der Verbindungselemente (30, 130, 230) Elektrodenanschlüsse (11, 12) benachbarter Batterien (10) elektrisch verbindet und einen Vorsprung (31b, 32b, 33b, 131b, 132b, 231b, 232b, 233b) aufweist, wobei der Vorsprung jedes der Verbindungselemente (30, 130, 230) mit dem Messelement (40, 140, 240, 340) elektrisch verbunden ist und mit einem der Aufnahmeabschnitte (42, 142, 242, 342) in Eingriff steht, wobei:
das Messelement (40, 140, 240, 340) einen ersten Körperabschnitt und einen zweiten Körperabschnitt aufweist,
sich der erste Körperabschnitt und der zweite Körperabschnitt entlang gegenüberliegender Seiten des zumindest einen Freilegeabschnitts erstrecken, und
sich der erste Körperabschnitt und der zweite Körperabschnitt zwischen den Elektrodenanschlüssen (11, 12) jeder der Batterien (10) erstrecken.

2. Batteriemodul nach Anspruch 1, ferner aufweisend ein Auslassaufnahmeelement, das den zumindest einen Freilegeabschnitt überlappt und einen Auslassweg für das zumindest eine Entlüftungsloch (14) definiert.

3. Batteriemodul nach zumindest einem der Ansprüche 1 und 2, wobei der zumindest eine Freilegeabschnitt das Entlüftungsloch (14) jeder der Batterien (10) freilegt.

4. Batteriemodul (400) nach Anspruch 3, wobei:
der zumindest eine Freilegeabschnitt einen ersten Freilegeabschnitt (344) und einen zweiten Freilegeabschnitt (344) aufweist,
der erste Freilegeabschnitt (344) ein erstes Entlüftungsloch (14) einer ersten Batterie (10) freilegt, und
der zweite Freilegeabschnitt (344) ein zweites Entlüftungsloch (14) einer zweiten Batterie (10) freilegt.

5. Batteriemodul (100, 200, 300) nach Anspruch 3, wobei der zumindest eine Freilegeabschnitt ein einzelner Freilegeabschnitt, der alle der Entlüftungslöcher (14) der Batterien (10) freilegt, ist.

6. Batteriemodul (100, 200, 300, 400) nach einem der Ansprüche 2 bis 5, aufweisend:
dass jeder des Vorsprungs (31b, 32b, 33b, 131b, 132b, 133b, 231b, 232b, 233b) sich vom jeweiligen Verbindungselement (30, 130, 230) erstreckt und eine oberste Oberfläche, die von den Batterien (10) abgewandt ist, aufweist, wobei die oberste Oberfläche jedes Vorsprungs (31b, 32b, 33b, 131b, 132b, 133b, 231b, 232b, 233b) mit einem der Aufnahmeabschnitte in Eingriff steht.

7. Batteriemodul nach Anspruch 6, wobei die oberste Oberfläche jedes Vorsprungs (31b, 32b, 33b, 131b, 132b, 133b, 231b, 232b, 233b) mit einer unteren Oberfläche des Aufnahmeabschnitts (42, 142, 242, 342) in Eingriff steht.

8. Batteriemodul (100, 400) nach zumindest einem der Ansprüche 6 und 7, wobei:
die Aufnahmeabschnitte Kerben (42a, 42b, 42c, 342a, 342b, 342c) sind, und
der Vorsprung (31b, 32b, 33b) jedes der Verbindungselemente (30) in eine der Kerben (42a, 42b, 42c, 342a, 342b, 342c) eingesetzt wird.

9. Batteriemodul nach Anspruch 8, wobei:
die Kerben (42a, 42b, 42c, 342a, 342b, 342c) jeweils eine erste Breite aufweisen,
der Vorsprung (31b, 32b, 33b) jedes der Verbindungselemente (30) eine zweite Breite aufweist, und
die erste Breite kleiner als die zweite Breite ist.

10. Batteriemodul nach zumindest einem der Ansprüche 8 und 9, wobei:
sich der Vorsprung (31b, 32b, 33b) jedes der Verbindungselemente (30) von einer obersten Oberfläche jedes der Verbindungselemente (30) erstreckt, und
die oberste Oberfläche jedes Vorsprungs (31b, 32b, 33b) koplanar mit der obersten Oberfläche jedes der Verbindungselemente (30) ist.

11. Batteriemodul (200, 300) nach zumindest einem der Ansprüche 6 und 7, ferner aufweisend eine Säule (131c, 132c, 133c, 231c, 232c, 233c) auf dem Vorsprung (131b, 132b, 133b, 231b, 232b, 233b) jedes der Verbindungselemente (130, 230), wobei:
die Aufnahmeabschnitte Durchgangslöcher (142a, 142b, 142c, 242a, 242b, 242c) sind,
die Säule (131c, 132c, 133c, 231c, 232c, 233c) jedes der Verbindungselemente (130, 230) durch eines der Durchgangslöcher (142a, 142b, 142c, 242a, 242b, 242c) vorsteht,
sich der Vorsprung (131b, 132b, 133b, 231b, 232b, 233b) jedes der Verbindungselemente (130) von einer obersten Oberfläche jedes der Verbindungselemente (130, 230) in eine Richtung parallel zur obersten Oberfläche jedes der Verbindungselemente (130) erstreckt, und
die Säule (131c, 132c, 133c, 231c, 232c, 233c) jedes der Verbindungselemente (130) vom Vorsprung (131b, 132b, 133b, 231b, 232b, 233b) in eine Richtung perpendikulär zur obersten Oberfläche jedes der Verbindungselemente (130, 230) vorsteht.

12. Batteriemodul nach Anspruch 11, wobei:
die Säule (131c, 132c, 133c) jedes der Verbindungselemente (130) einen ersten Abschnitt mit einem ersten Durchmesser und einen zweiten Abschnitt mit einem zweiten Durchmesser aufweist,
der zweite Abschnitt zwischen dem ersten Abschnitt und dem Vorsprung (131b, 132b, 133b) jedes der Verbindungselemente (130) ist, und
der erste Durchmesser größer als der zweite Durchmesser ist.

13. Batteriemodul nach zumindest einem der Ansprüche 11 und 12, wobei die Säule (231c, 232c, 233c) jedes der Verbindungselemente (230) mittels einer separaten Befestigungsvorrichtung (231d, 232d, 233d) mit dem Messungsglied verkoppelt ist.

## Revendications

1. Module de batterie (100, 200, 300, 400) comprenant :
des batteries (10), chacune des batteries comprenant des bornes d'électrode (11, 12) et un trou d'évent (14) ;
un élément de mesure (40, 140, 240, 340) qui mesure un ou plusieurs éléments parmi une tension, un courant ou une température de chacune des batteries (10), l'élément de mesure (40, 140, 240, 340) comprenant une partie d'exposition (344) et des parties de réception (42, 142, 242, 342), la au moins une partie d'exposition (344) expose au moins un orifice d'évent (14) des batteries (10) ; et
des éléments de connexion (30, 130, 230), chacun des éléments de connexion (30, 130, 230) connectant électriquement les bornes d'électrode (11, 12) des batteries voisines (10) et comprenant une saillie (31b, 32b, 33b, 131b, 132b, 133b, 231b, 232b, 233b), la saillie de chacune des éléments de connexion (30, 130, 230) étant électriquement connectée à l'élément de mesure (40, 140, 240, 340) et mettant en prise l'une des parties de réception (42, 142, 242, 342), dans lequel :
l'élément de mesure (40, 140, 240, 340) comprend une première partie de corps et une seconde partie de corps,
la première partie de corps et la seconde partie de corps s'étendent le long des côtés opposés de la au moins une partie d'exposition, et
la première partie de corps et la seconde partie de corps s'étendent entre les bornes d'électrode (11, 12) de chacune des batteries (10).

2. Module de batterie selon la revendication 1, comprenant en outre un élément de réception d'échappement qui recouvre la au moins une partie d'exposition et définit une trajectoire d'échappement pour le au moins un trou d'évent (14).

3. Module de batterie selon au moins l'une des revendications 1 et 2, dans lequel la au moins une partie d'exposition expose le trou d'évent (14) de chacune des batteries (10).

4. Module de batterie (400) selon la revendication 3, dans lequel :
la au moins une partie d'exposition comprend une première partie d'exposition (344) et une seconde partie d'exposition (344),
la première partie d'exposition (344) expose un premier trou d'évent (14) d'une première batterie (10), et
la seconde partie d'exposition (344) expose un second trou d'évent (14) d'une seconde batterie (10).

5. Module de batterie (100, 200, 300) selon la revendication 3, dans lequel la au moins une partie d'exposition est une partie d'exposition unique qui expose la totalité des trous d'évent (14) des batteries (10).

6. Module de batterie (100, 200, 300, 400) selon l'une des revendications 2 à 5, comprenant :
chacune des saillie (31b, 32b, 33b, 131b, 132b, 133b, 231b, 232b, 233b) s'étendant à partir de l'élément de raccordement (30, 130, 230) respectif et comprenant la surface la plus haute qui est orientée à l'opposé des batteries (10), la surface la plus haute de chaque saillie (31b, 32b, 33b, 131b, 132b, 133b, 231b, 232b, 233b) mettant en prise l'une des parties de réception.

7. Module de batterie selon la revendication 6, dans lequel la surface la plus haute de chaque saillie (31b, 32b, 33b, 131b, 132b, 133b, 231b, 232b, 233b) met en prise une surface inférieure de la partie de réception (42, 142, 242, 342).

8. Module de batterie (100, 400) selon l'une des revendications 6 et 7, dans lequel :
les parties de réception sont des rainures (42a, 42b, 42c, 342a, 342b, 342c), et
la saillie (31b, 32b, 33b) de chacun des éléments de connexion (30) est insérée dans l'une des rainures (42a, 42b, 42c, 342a, 342b, 342c).

9. Module de batterie selon la revendication 8, dans lequel :
les rainures (42a, 42b, 42c, 342a, 342b, 342c) ont chacune une première largeur,
la saillie (31b, 32b, 33b) de chacun des éléments de connexion (30) a une seconde largeur, et
la première largeur est inférieure à la seconde largeur.

10. Module de batterie selon au moins l'une des revendications 8 et 9, dans lequel :
la saillie (31b, 32b, 33b) de chacun des éléments de connexion (30) s'étend à partir de la surface la plus haute de chacun des éléments de connexion (30), et
la surface la plus haute de chaque saillie (31b, 32b, 33b) est coplanaire avec la surface la plus haute de chacun des éléments de connexion (30).

11. Module de batterie (200, 300) selon au moins l'une des revendications 6 et 7, comprenant en outre une colonne (131c, 132c, 133c, 231c, 232c, 233c) sur la saillie (131b, 132b, 133b, 231b, 232b, 233b) de chacun des éléments de connexion (130, 230), dans lequel :
les parties de réception sont des trous débouchants (142a, 142b, 142c, 242a, 242b, 242c),
la colonne (131c, 132c, 133c, 231c, 232c, 233c) de chacun des éléments de connexion (130, 230) fait saillie à partir de l'un des trous débouchants (142a, 142b, 142c, 242a, 242b, 242c),
la saillie (131b, 132b, 133b, 231b, 232b, 233b) de chacun des éléments de connexion (130) s'étend à partir de la surface la plus haute de chacun des éléments de connexion (130, 230) dans une direction parallèle à la surface la plus haute de chacun des éléments de connexion (130), et
la colonne (131c, 132c, 133c, 231c, 232c, 233c) de chacun des éléments de connexion (130) fait saillie à partir de la saillie (131b, 132b, 133b, 231b, 232b, 233b) dans une direction perpendiculaire à la surface la plus haute de chacun des éléments de connexion (130, 230).

12. Module de batterie selon la revendication 11, dans lequel :
la colonne (131c, 132c, 133c) de chacun des éléments de connexion (130) a une première partie avec un premier diamètre et une seconde partie avec un second diamètre,
la seconde partie est entre la première partie et la saillie (131b, 132b, 133b) de chacun des éléments de connexion (130), et
le premier diamètre est supérieur au second diamètre.

13. Module de batterie selon au moins l'une des revendications 11 et 12, dans lequel la colonne (231c, 232c, 233c) de chacun des éléments de connexion (230) est couplée à l'élément de mesure avec une fixation séparée (231d, 232d, 233d).
